# EUROPEAN PATENT APPLICATION

(11) **EP 1 659 712 A1**
(43) Date of publication of application: **24.05.2006**
(21) Application number: 05006426.0
(22) Date of filing: 23.03.2005
(51) Int. Cl.: H04H 1/00

(54) **Microwave hybrid bidirectional distribution and communication system**

(30) Priority: 17.11.2004 SI 200400315
(71) Applicant: Sijanec, Boris, 9250 Gornja Radgona (SI); Bolcina, Miran, 5270 Ajdovscina (SI); Gnezda, Bozo, 5270 Ajdovscina (SI); Zeleznik, Ales, 2000 Maribor (SI)
(72) Inventor: Sijanec, Boris, 9250 Gornja Radgona (SI); Bolcina, Miran, 5270 Ajdovscina (SI); Gnezda, Bozo, 5270 Ajdovscina (SI); Zeleznik, Ales, 2000 Maribor (SI)
(74) Representative: Grünecker, Kinkeldey, Stockmair & Schwanhäusser Anwaltssozietät

(57) **Abstract**

The present invention relates to a microwave hybrid bidirectional distribution communication system. The system of the invention provides transfer of data and picture both ways while unifying and simplifying the communication systems as well as the technical equipment at the user's location.

The system according to the invention comprises:
- a main station (101), receiving satellite signals via an antenna (103), radio and television signals (FM-VHF-UHF) via an antenna (102), data from the world wide web via an Ethernet connection (104), and providing the conversion of said signals into a downstream (105) interfrequency, which is then converted by a transmit unit (106) into a downstream (108) carrier frequency and broadcast via an antenna (107) to users (109, 110), as well as receiving signals of an upstream (111) carrier frequency via an antenna (112) and a receive unit (113), and converting said signals to an upstream (114) interfrequency through a cable router (210) toward service centers (220),
- user (109, 110) equipment, receiving, via a transceiver antenna (507), a downstream (107) carrier frequency and frequency-converting it by means of a combined external unit (500) into a downstream (520) interfrequency to be received by a digital receiver (600), which digital receiver (600) then delivers it, suitably adapted, as a video and audio signal to a TV display (630), and as a data stream to a standard cable modem (640), said digital receiver (600) simultaneously forming an upstream (521) interfrequency from the standard cable modem (640) and delivering it to the combined external unit (500), which frequency-converts it and transmits it via said antenna (507) as an upstream (111) carrier frequency.

## Description

The present invention relates to a microwave hybrid bidirectional distribution communication system (MHBDS). The system of the invention provides wireless unidirectional transfer of picture and bidirectional transfer of data. By means of the present invention the communication systems as well as the technical equipment at the user's location are unified and simplified.

In the field of media and data communication a vast number of different communication systems are currently in use, each encompassing extremely heterogeneous technical equipment. For this reason, the situation in the field is very intricate both to the media providers - operators and, even more so, to the end users.

Microwave wireless systems, generally going by the acronym MMDS, represent the latest generation of information systems and are becoming increasingly popular due to their simplicity and efficiency. They may be employed for transferring picture and data both ways. However, prior art MMDS systems exhibit two main disadvantages, which will be readily described.

All MMDS systems use a relatively narrow frequency range, usually up to 2 GHz wide, for two way communication, which is to say for the downstream and the upstream. Although this technical solution may be adequate in terms of transfer capacity, it doesn't allow the operator to select arbitrary frequency bands, which is a priority considering differing country regulations. In most countries certain frequency ranges, such as the 2.4 GHz and the 5.4 GHz range, may be utilized free of charge for transferring data. Prior art MMDS systems cannot take advantage of this opportunity in order to transfer TV programming and data simultaneously via the downstream of a legally appointed frequency band, occupying, due to its structure, a wider frequency band as opposed to the upstream, which is mainly intended for data transfer and accordingly requires a narrower frequency band; as a consequence thereof, in the embodiment of the invention the downstream frequency band 5.4 GHz is too narrow for transferring TV programs and data. In the upstream, however, only data is being transferred, making said frequency band adequate in terms of frequency bandwidth. As may be inferred from the above, wireless bidirectional connections require transmission and reception components which are capable of adapting their frequency to comply with the specific local legislation.

Conventional MMDS systems make use of the so-called wireless routers (special wireless data transfer routers) for bidirectional data transfer, which routers, however, can not be used for simultaneous data transfer via cable networks. Consequently, operators are forced to maintain duplicate equipment at the data transfer center. Likewise, the equipment at the end user's location varies. Thus, a standard cable modem is used by cable network users, whereas a wireless modem is used by microwave MMDS network users. Because of this, upgrading and interconnecting different preexisting networks into unified networks becomes very difficult and not cost-effective. This is particularly noticeable in the event of a user moving to another location, when practically the entire communication equipment must be replaced because of incompatible technical equipment between the cable network and the wireless network, particularly if two distinct operators are involved.

Similar disadvantages will become readily apparent by comparing reference patents, viz.:
PCT/US94/03975, Hemmie, April/94: Bi-directional TV/DATA transmission system:
   The said patent relates chiefly to the disclosure of a novel bidirectional converter enabling simultaneous bidirectional downstream and upstream for picture and data. Said bidirectional converter has the disadvantage of employing a single local oscillator, because of which the frequency band can not be arbitrarily selected. Moreover, the aforesaid patent is expressly limited by the author to the 2500 - 2686 MHz frequency band for the downstream and to the 2150 - 2162 MHz frequency band for the upstream, which severely curtails the applicability of the patent in view of differing laws and regulations.
US005924039, Hugenberg, July/94: Digital MMDS:
   The said patent relates mainly to a packet distribution of frequencies on both polarizations, providing, to be sure, enough space for transferring picture and data within a narrow frequency band, namely, the 2500 - 2686 MHz frequency band for the downstream and the 2150 - 2162 MHz frequency band for the upstream, which likewise curtails the applicability of the patent. Additionally, the usefulness of this patent is particularly doubtful in view of the fact that separate antennas are required for the downstream and for the upstream.

Given that most operators employ a combination of different network systems within their media networks, it makes sense to simplify existing networks and reduce their operation costs while at the same time technically improving the system, consequently providing a better service to the end consumer.

The object of the present invention is to construct a microwave bidirectional distribution communication system and elements thereof which does not exhibit the shortcomings of prior art systems and, in addition, enables simplification and unification of equipment both at the operator's site and the end user's locations, allows arbitrary selection of the downstream and upstream frequency band for simultaneous transmission of TV programming and bidirectional transfer of data, e. g. with a downstream within the 21.4 GHz frequency band and an upstream within a 5.4 GHz frequency band. The solution according to the invention also allows a standard cable router CMTS to be used for transferring data over a cable network and for simultaneously transferring data over a MMDS network.

This object is achieved with the combined external unit according to claim 1 and the microwave infrared bidirectional distribution communicating system according to claim 4. Advantageous embodiments are according to the dependent claims.

The invention will better emerge from the detailed description that follows.

The present invention sets forth a uniform digital media system combining the unidirectional transfer of radio and television programs with the bidirectional transfer of Internet and Internet telephony. The invention comprises technological system solutions, relevant to the operators' necessities, and technical products, relevant to the end users' equipment.

Accordingly, the object of the present invention consists of two apparatuses:
The first apparatus comprises the operator's main station, wherein by introducing different channel modules new services are provided and existing services are improved.

The second apparatus comprises the innovative user equipment, by means of which the quality of the existing services is improved, new services are enabled, and a data upstream is established which has never been utilized before in conventional art microwave distribution systems.

The invention shall now be described with reference to an embodiment thereof and the accompanying drawings, representing:
Figure 1: The schematic diagram of the system.
Figure 2: The main station.
Figure 3: The data channel module.
Figure 4: The combined external unit.
Figure 5: The multifunction digital receiver.

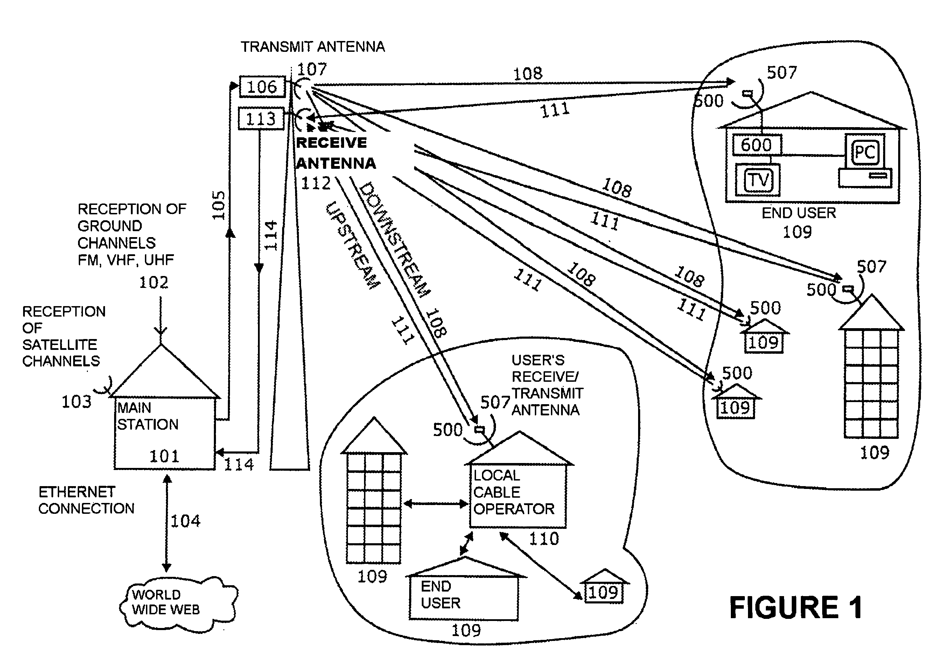

Figure 1: The schematic diagram of the system, shows the technological setup of the microwave hybrid bidirectional distribution communication system. In the main station 101, signals received through other media systems, such as the satellite system (SAT) via the antenna 103, radio and television (FM-VHF-UHF) via the antenna 102, and the world wide web via the Ethernet connection 104, are converted into the downstream 105 interfrequency in the 1000 MHz to 1800 MHz range, traveling via a coaxial line to the transmission unit 106 where the carrier frequency - in the 2 GHz to 45 GHz range depending upon conditions - of the downstream 108 is generated via the transmit antenna 107 and broadcast wirelessly to the end user 109, provided with the receive antenna 507 comprising the combined external unit 500, which external unit 500 converts the received downstream 108 into a lower interfrequency of the downstream 520, in the 950 MHz to 2000 MHz range, and forwards it over a coaxial line to the multifunction digital receiver 600.

The interfrequency upstream 521 is transferred over the same coaxial line as the interfrequency downstream 520, but in the opposite direction, which is to say, from the multifunction digital receiver 600 to the combined external unit 500, whereupon via the antenna 507 the upstream 111 carrier frequency within the range of 2 GHz to 45 GHz is generated and broadcast wirelessly to the receive antenna 112, converted to the upstream 114 interfrequency by means of the receive unit 113, and finally conducted over a coaxial line to the main station 101.

The end user may also be a local cable operator, in which case only one antenna 507 comprising a combined external unit 500 will be required for covering a plurality of end users.

By the same principle, the end user 109 may also be, say, a large building with an installed cable network.

For wireless broadcast of the downstream 108 carrier frequency, the 2 GHz to 45 GHz range may be employed, depending upon specific local legislation in point. Individual users 109 or users in existing organized local cable networks may receive media services either directly or through a cable operator 110, via the antenna 507 with a combined external unit 500 and the multifunction digital receiver 600. Using the same equipment, the end users 109 and local cable operators 110 in existing organized local cable networks may of course access the world wide web via the upstream 111 through the receive system with the antenna 112 and the receive unit 113, or they may select other available services. For such transfer any carrier frequency within the 2 GHz to 45 GHz range may likewise be utilized for the upstream 111, depending upon the specific local legislation in point.

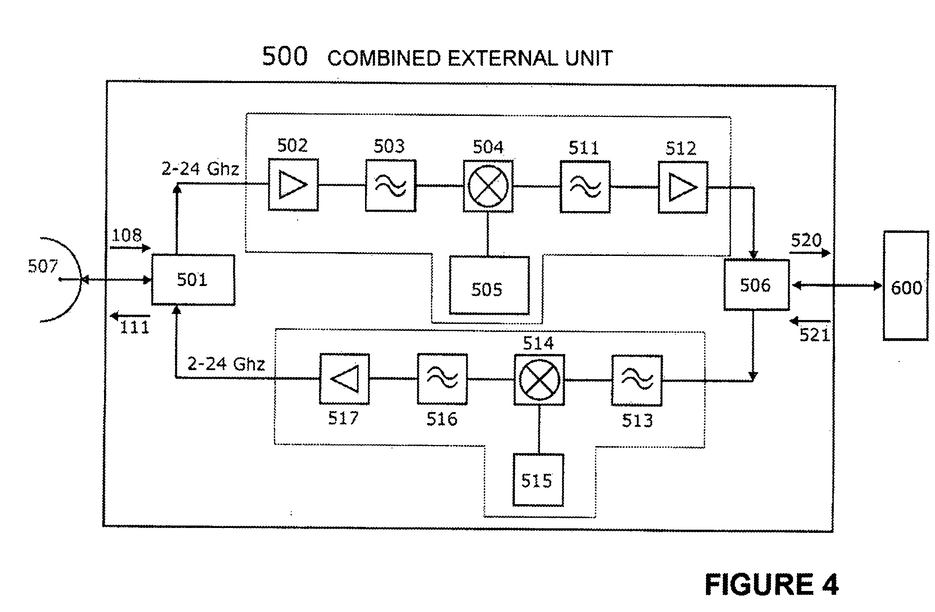

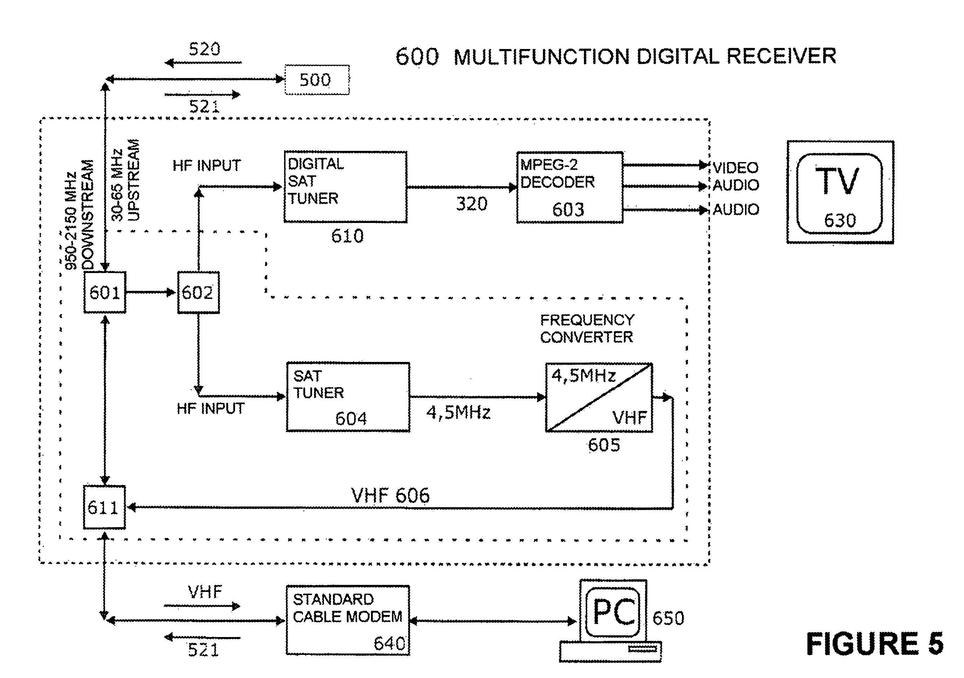

The elements of the system and their respective functions are as follows:
- the main station 101 comprises the MHBDS operator's equipment, by means of which the signals received from other networks (SAT, FM-VHF-UHF) and service centers 220 are converted to the downstream 105 interfrequency,
- the receive antennas 102 for receiving radio signals over the FM band, and television signals over the VHF and UHF bands,
- the receive antennas 103 for receiving radio and television signals over the satellite band,
- the Ethernet connection 104 to the world wide web for accessing Internet services,
- the transmit unit 106 with the antenna 107 for converting the downstream 105 interfrequency to the downstream 108 carrier frequency, reaching the end users 109 either directly, or through the cable operator 110,
- the receive unit 113 with the antenna 112 of the MHBDS operator receives the upstream 111 carrier frequency from the end users 109 either directly or through the cable operator, and converts the received carrier frequency upstream 111 to the upstream 114 interfrequency,
- the end user 109 provided with separate equipment as an individual user, or the end user 109 within a local cable network of the cable operator 110 and having access to MHBDS services through the local cable operator 110,
- the antenna 507 with the combined external unit 500, as shown in Figure 4,
- the multifunction digital receiver 600, as shown in Figure 5.

With respect to frequency and frequency range, the downstream 105 interfrequency is composed of a plurality of frequency carriers of various levels and modulations. To facilitate transfer over coaxial lines, lower frequencies are employed on interfrequencies. According to the present invention and the exemplifying embodiment, the utilized downstream 105 interfrequency is 1000 MHz to 1800 MHz, which is sent over a coaxial line to the transmit unit 106 and subsequently converted into a higher frequency and sent via the antenna 107 as the carrier frequency of the microwave channel-organized downstream 108, to a plurality of remote locations, namely, to the end users 109 or to the cable operator 110. The downstream 108 carrier frequency always depends upon pertinent legislation. It is therefore of paramount importance to the operator to have the possibility of adapting the equipment to the allocated frequency and of complying easily with the pertinent legal requirements and concession fees. Furthermore, by using this approach, the system of the invention allows capacities to be expanded arbitrarily over any legally appointed frequencies. As an example, as downstream 108 carrier frequency, the 20.7 to 20.9 GHz frequency band may be utilized to broadcast TV picture, whereas the 21.1 GHz to 21.3 GHz frequency band may be used to transfer data, within the same downstream. Therefore, no matter what frequencies may be prescribed by the competent government agency, the operator using the system of the invention will always conform easily. The only problem may be the price of a particular concession. And this represents the main advantage to the operators, which are permanently enabled to accommodate to any regulations put forth by the administration, even at a later date when a system is already in function.

The upstream 111 carrier frequency is a microwave channel-organized data transfer from a plurality of remote locations to a single central location, namely, from end users 109 and/or cable operators 110 to the antenna 112 via the receive system 113 to the upstream 114 interfrequency.

The upstream 111 carrier frequency likewise depends on pertinent legislation. It is therefore of crucial importance to the operator to have the possibility of arbitrarily shifting to the allocated frequency, thereby complying easily with the pertinent legal requirements and concession fees. Every legal system, however, makes provisions for certain frequency ranges which may be utilized with no concession fees and are intended to be used directly by all citizens alike, free of charge. Therefore, the system according to the invention envisages the utilization of the 5.4 GHz frequency as a preferred carrier frequency of the data upstream 111, the end users being the only users thereof. It is the duty of the operator to apply to the competent authority for the permission to use said upstream frequency; otherwise, said authority would be overwhelmed with tens of thousands of end-user requests to grant a concession that is free of charge. If, say, the frequency of 18.9 GHz was employed as the upstream 111 carrier frequency, the end users would be legally bound to pay a concession fee to the government for utilizing said frequency, which would be costly and senseless.

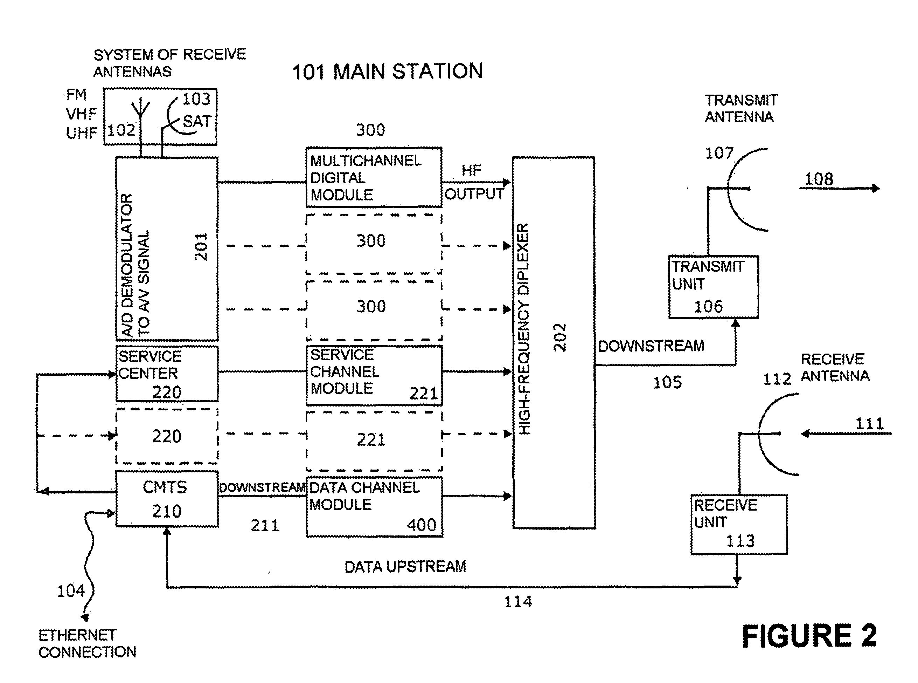

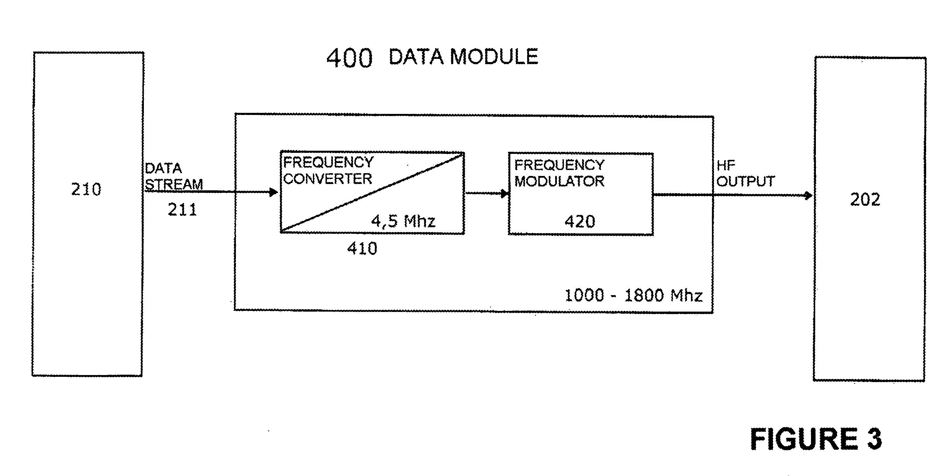

Figure 2: The main station, illustrates the set-up for converting the signals coming from other media systems and service centers 220, namely, SAT via antennas 103, FM-VHF-UHF via antennas 102, and the world wide web via the Ethernet connection 104, to the downstream 105 interfrequency, and for transmitting and receiving signals on arbitrary frequencies between 2 GHz and 45 GHz. The purpose of the main station 101 is to reconcile variously organized signals from various sources, so that a uniformly organized data stream may be formed. The main station 101 consists of various equipment for converting signals.
- The analog and digital demodulator 201 converts signals received via antennas 102 and 103 into an audio and a video signal,
- the high-frequency diplexer 202 combines the signals from multichannel digital modules 300, service channel modules 221, and data channel module 400 into a unified interfrequency downstream 105, diplexed in the frequency range of 1000 MHz to 1800 MHz,
- the cable router 210 generates the data downstream 211 from the Ethernet connection 104 to the world wide web and forwards it, via the data channel module 400 and the high-frequency diplexer 202 as the downstream 105 interfrequency, and over the transmit unit 106 and the antenna 107 as the downstream 108 carrier frequency, to the end users 109 and/or the cable operators 110. Simultaneously, the cable router 210 receives the data upstream 114 interfrequency via the antenna 112 and the receive unit 113, and carries it back to the world wide web connection 104,
- the service centers 220 provide other services, such as "video on demand", "security center", and so on,
- the service channel modules 221 for converting the signals from service centers 220 to the diplexer 202,
- the multichannel digital module 300 for converting the audio-video signal coming from the analog and digital demodulator 201 to the diplexer 202,
- the data channel module 400 for converting the signal, namely the data downstream 211 coming from the router 210 and proceeding to the diplexer 202. The module 400 is shown in more detail in Figure 3.

Figure 3: Data channel module, discloses the structure and the operation of the Internet channel module 400.

In the module 400, the data downstream 211 from the cable router 210 is converted, by means of the frequency converter 410 and the frequency modulator 420, as a data subcarrier, into a HF signal between 1000 MHz and 1800 MHz to be forwarded through the high-frequency diplexer 202.
- The data channel module 400 adapts the cable Internet data stream 211 for transferring said service into the microwave hybrid bidirectional distribution communication system,
- the frequency converter 410 converts the data downstream 211 to 4.5 MHz,
- the frequency modulator 420 in the module 400 frequency-modulates the 4.5 MHz frequency, coming from the frequency converter 410, to the carrier frequency between 1000 MHz and 1800 MHz, to be passed through the diplexer 202.

Conventional cable routers and conventional cable modems require a stable frequency and a high signal-to-noise ratio in order to operate. To fulfill these requirements in a wireless environment while remaining, in terms of end-user reception equipment, within the price range favorable to the end users 109, such a modulation should be used at the main station as to neutralize all those limitations and still allow the end user's 109 multifunction digital receiver 600 to employ standard large consumer electronic components, such as, in the described embodiment, the analog satellite frequency demodulator 604 and the frequency converter to a VHF channel, or the DRO oscillator 505 in the combined external unit 500, which is substantially cheaper than crystal and PLL-VCO oscillators. For this reason, in the main station 101 of the invention, the data module 400 is employed for converting from the standard modulation of the cable router 210.

The purpose of the data module 400 is to convert the high-frequency signal of the data stream 211 into a lower frequency 4.5 MHz that subsequently modulates the frequency modulator 420, whereupon the obtained carrier frequency is modulated by the data subcarrier 4.5 MHz which, however, remains the same regardless of the carrier frequency.

Through this procedure it is achieved that, subsequent to the frequency demodulation in the SAT tuner 604 of the multifunction digital receiver 600, the resulting output is 4.5 MHz at all times, regardless of considerable shifts in the input frequency. The frequency modulation that is being used here is rather insensitive to poor signal-to-noise ratios, which makes it convenient for wireless transfers.

The DRO oscillator 505 is based on the principle of the oscillator frequency oscillating at a predetermined frequency, depending on a mechanical resonator, coupled in a positive feedback loop of a high-frequency transistor. Constructing such an oscillator requires few components and is economically quite convenient. The disadvantage with these oscillators is the deviation of the desired frequency depending on external temperature, which in our case is overcome through the use of the above-mentioned data channel module 400 and, at the end user's 109 location, the multifunction digital receiver 600.

Figure 4: The combined external unit 500 - which is located on the antennas 507 at the location of the end user 109 or the cable operator 110 - illustrates the function of said unit with the frequency carrier in the downstream 108 and the carrier frequency in the upstream 111. The combined external unit 500 is composed of a converter of the downstream 108 frequency carrier (the down converter) as shown in the upper part of Figure 4, and a converter of the upstream 111 frequency carrier (the up converter) as shown in the lower part of Figure 4.

From the antenna 507, doubling both as a receive and a transmit antenna, the received signal of the downstream 108 frequency carrier having an arbitrary frequency between 2 GHz and 45 GHz, via the waveguide splitter 501, the low-noise amplifier 502, the band pass filter 503, the mixer 504 with the oscillator 505, the band pass filter 511, the output amplifier 512, and through the diplexer 506, is converted to the downstream 520 interfrequency between 950 MHz and 2150 MHz, to be subsequently passed to the multifunction digital receiver 600. At the same time, in the opposite direction - namely, from the user 109 to the main station 101, which is to say, from the multifunction digital receiver 600 toward the antenna 507 - the upstream 521 interfrequency coming from the multifunction digital receiver 600 through the splitter 506, the band pass filter 513, the mixer 514 with the oscillator 515, the band pass filter 516, the amplifier 517 and the waveguide splitter 501, is converted from the incoming frequency between 30 MHz and 65 MHz to the outgoing frequency between 2 GHz and 45 GHz, which is sent back as the upstream 111 carrier frequency over the same antenna 507 toward the antenna 112 and to the receive unit 113, wherefrom it travels at the upstream 114 interfrequency to the main station 101.

The carrier frequency of the downstream (108) and the carrier frequency of the upstream (111) are spaced apart by at least 0.4 GHz.
- The combined external unit 500 combines in one unit all the elements for receiving, transmitting and converting the frequencies of the downstream 108 and of the upstream 111 and is installed on the receive-transmit antenna 507 of the user 109 or the operator 110,
- the waveguide splitter 501 routes the downstream 107 and the upstream 108 in their respective directions, regardless of frequency,
- the signal amplifier 502 ensures an adequate signal level,
- the band pass filter 503 passes a predetermined frequency band which depends upon the legally assigned frequency,
- the mixer 504, depending on the frequency of the local HF oscillator 505 and the incoming carrier frequency of the downstream, converts the frequency to the downstream 520 interfrequency,
- the HF oscillator 505 oscillates in voltage and current at a predetermined frequency and depends on the incoming carrier frequency of the downstream 108 and on the outgoing interfrequency of the downstream,
- the band pass filter 511, the range of which depends upon the legally assigned frequency,
- the splitter 506 routes the downstream 520 interfrequency, having a frequency between 950 MHz and 2150 MHz, and the upstream 521 interfrequency, having a frequency between 30 MHz to 65 MHz, in their respective directions,
- the band pass filter 513 passes a predetermined frequency band which depends upon the legally assigned frequency,
- the mixer 514, depending on the local HF oscillator 515 and the incoming interfrequency of the upstream 521, converts the frequency to the outgoing carrier frequency of the upstream 111,
- the HF oscillator 515 oscillates in voltage and current at a predetermined frequency and depends on the incoming carrier frequency of the upstream and on the outgoing carrier frequency of the upstream 111,
- the band pass filter 516 passes a predetermined frequency band,
- the signal amplifier 517 ensures an adequate signal level,
- the multifunction digital receiver 600 is described with reference to Figure 5.

Two separate HF local oscillators, namely oscillator 505 in the downstream and oscillator 515 in the upstream, are required in order to create an arbitrary difference between the downstream carrier frequency and the upstream carrier frequency, which depend upon the local legislation in point and are specified in the relative broadcast permit. Employing a single HF local oscillator would prevent the carrier frequencies in the downstream 108 and in the upstream 111 to be separately and flexibly adjusted.

Figure 5: The multifunction digital receiver 600, illustrates the structure and the operation of said receiver which allows the end user 109 to access any MHBDS services of the invention in accordance with her or his desires and capacities. The multifunction digital receiver 600 combines the features of a satellite receiver with those of a wireless modem.

At the downstream 520 interfrequency between 950 MHz and 2150 MHz, coming from the external unit 500, the signal is split up via known components, the diplexer 601, and the splitter 602.

The first part of said signal consists of video channels, whose signals travel, via the digital SAT tuner 610 as a digital transport stream 320 and via the MPEG-2 decoder 603 as a video and audio signal, to the TV display 630, namely, to a television and/or radio set or other suitable device.

The second part of the signal is composed of data channels, whose signals pass, via the SAT tuner 604, the frequency converter 605, and the diplexer 611, to the standard cable modem 640, connected via an Ethernet connection to a personal computer 650 or other appropriate device of the end user 109.

The upstream 521 interfrequency is formed in the following manner: the signal first travels from the personal computer 650 to the standard cable modem 640, where it is converted to the upstream 521 interfrequency between 30 MHz and 65 MHz, and subsequently proceeds, via both diplexers 611 and 601, to the external unit 500.

The multifunction digital receiver comprises the following:
- the diplexer 601 simultaneously routes the downstream 520 interfrequency and the upstream 521 interfrequency in their respective directions,
- the splitter 602 splits up the downstream 520 interfrequency into a picture component and a data component,
- the MPEG-2 decoder 603 reconverts the compressed transport stream 320 back into audio/video components,
- the SAT analog tuner 604 frequency-demodulates the data channels to 4.5 MHz,
- the frequency converter 605 converts the incoming data stream from 4.5 MHz to a VHF signal 606 and delivers it to the diplexer 611,
- the diplexer 611 combines the VHF signal and the data upstream 521, and routes them in their respective directions,
- the SAT digital tuner 610 converts the incoming frequency into a compressed digital transport stream 320.

The following user equipment is connected to the receiver 600:
- a standard TV display 630 having separate video and audio inputs,
- a standard cable modem 640 adapts the data upstream 521 and the VHF signal 606 to the personal computer of the user 109,
- a personal computer 650.

This invention has been described with reference to an exemplifying embodiment, wherein particularly frequencies have been expressly specified. As will be understood by those skilled in the art, however, any microwave hybrid bidirectional distribution communication system in accordance with the above description and the appended claims comes likewise within the scope of the invention as claimed, although different transmit frequencies on the antennas may be selected.

As will be seen from the foregoing, the disclosed system in itself represents a technological invention. Heretofore, no microwave system providing equal services has been known, much less physically assembled. The object of the invention is therefore a microwave hybrid bidirectional distribution communication system, as well as certain novel elements which enable the invention to be realized. Said novel elements are: the data channel module 400, the combined external unit 500, and the multifunction digital receiver 600.

The system according to the invention provides the following advantages:
To the operator:
   - allows immediate coverage of all users anywhere within the service region;
   - unification of equipment both at the main station and the end users' locations;
   - simplified introduction of new services, such as:

   channel selection, video on demand, IP telephony, alarm control, emergency call, telemetry,
   statistics, etc.
To the user:
   - reception of DVD-quality picture;
   - reception of CD-quality sound;
   - Internet services of ADSL quality or better;
   - selection of services according to one's desires and financial capabilities;
   - cheaper equipment, which means more accessible services.

## Claims

1. Combined external unit for a microwave hybrid bi-directional distribution communication system, providing wireless unidirectional transfer of picture data and bi-directional transfer of data comprising:
a downstream (108) carrier frequency converter and an upstream (111) carrier frequency converter, wherein the downstream (108) carrier frequency converter comprises a first dedicated oscillator (505) of its own, and the upstream (111) carrier frequency converter likewise comprises a second dedicated oscillator (515) of its own.

2. Combined external unit according to Claim 1, **characterized in** further comprising a waveguide splitter (501), and
wherein the downstream (108) carrier frequency converter comprises a low-noise amplifier (502), a band pass filter (503), a mixer (504) with the first dedicated oscillator (505), a band pass filter (511) and an output amplifier (512) for converting a carrier frequency signal coming from an antenna (507) to a frequency between 950 MHz and 2150 MHz as a downstream (520) interfrequency, which is to be passed to a multifunction digital receiver (600) via a further splitter (506).

3. Combined external unit according to Claim 2, **characterized in that** the upstream (111) carrier frequency converter comprises a band pass filter (513), a mixer (514) with the second dedicated oscillator (515), a band pass filter (516) and an amplifier (517) for converting a signal from the user (109, 110) traveling towards the antenna (507), in particular coming from the multifunction digital receiver (600) through the splitter (506), from the incoming upstream (521) interfrequency having a frequency between 30 MHz and 65 MHz, to the output frequency.

4. Microwave hybrid bidirectional distribution communication system, providing wireless unidirectional transfer of picture and bidirectional transfer of data, comprising:
- a main station (101) for receiving satellite, radio and/or television signals (FM-VHF-UHF) via antennas (102,103), information from the world wide web via an Ethernet connection (104) and for providing the conversion of said signals into a downstream (105) interfrequency, which is converted by a transmit unit (106) into a downstream (108) carrier frequency and broadcast via an antenna (107) to users (109, 110), as well as for receiving upstream (111) carrier frequencies via an antenna (112) to a receive unit (113), wherein the receive unit (113) is configured for converting said signals to an upstream (114) interfrequency and sending them through a cable router (210) to service centers (220) and to the world wide web, and
- user (109, 110) equipment for receiving, via a transceiver antenna (507), a downstream (108) carrier frequency, which is frequency-converted by a combined external unit (500) according to one of claims 1 to 3 into a downstream (520) interfrequency to be received by a digital receiver (600), wherein the digital receiver (600) is configured to deliver it, suitably adapted, as a video and audio signal to a TV display (630), and as a data stream to a standard cable modem (640), wherein the digital receiver (600) is furthermore configured to simultaneously form an upstream (521) interfrequency from the standard cable modem (640) and to deliver it to the combined external unit (500) for frequency-convertion and transmission via said antenna (507) as an upstream (111) carrier frequency.

5. System according to claim 4, **characterized in that** the main station (101) comprises a data channel module (400) for receiving data downstream (211) from the cable router (210) and for converting it, by means of an included frequency converter (410) and an included frequency modulator module (420), into a HF signal between 1000 MHz and 1800 MHz, to be passed through a high-frequency diplexer (202).

6. System according to claim 5, **characterized in that** the frequency converter (410) of the data channel module (400) is configured to convert the data downstream (211) to 4.5 MHz, whereupon the frequency modulator (420) of the said module (400) frequency-modulates the incoming 4.5 MHz frequency, as a data carrier, to an arbitrary frequency within the 1000 MHz to 1800 MHz frequency range, to be passed through the diplexer (202).

7. System according to anyone of the preceding claims, **characterized in that** the transmit carrier frequency of the upstream (111) on the antenna (507) is the frequency specified by the competent government agency as exempt from concession fees, and that the transmit carrier frequency of the downstream (108) is in the range of 2 GHz to 45 GHz, preferably in the range of 2 GHz to 24 GHz, wherein the combined external unit is configured such that the downstream (108) carrier frequency and the upstream (111) carrier frequency are spaced apart by at least 0.4 GHz.

8. System according to one of claims 4 to 7, **characterized in that**, the multifunction digital receiver (600) is configured such that
- the downstream (520) signal, coming from the combined external unit (500), is split up via a diplexer (601) and a splitter (602) into a first part, consisting of video channels, whose signals pass, via a digital SAT tuner (610) as a digital transport stream (320) and via a MPEG-2 decoder (603) as a video and audio signal, to a TV display (630) or other suitable device, and a second part consisting of data channels, whose signals pass, via a SAT tuner (604), a frequency converter (605), and a diplexer (611), to the standard cable modem (640), connected via an Ethernet connection to a personal computer (650) or other suitable device, and
- in the opposite direction, the signal first travels from the personal computer (650) to the standard cable modem (640), where the upstream (521) interfrequency is formed and passed via both diplexers (611, 601) to the external unit (500).
